# EUROPEAN PATENT APPLICATION

(11) **EP 1 630 587 A1**
(43) Date of publication of application: **01.03.2006**
(21) Application number: 05018538.8
(22) Date of filing: 25.08.2005
(51) Int. Cl.: G02B 27/01

(54) **HMD information apparatus and method of operation thereof**

(30) Priority: 27.08.2004 KR 2004067858
(71) Applicant: Samsung Electronics Co., Ltd., Yeongtong-gu Suwon-si, Gyeonggi-do (KR)
(72) Inventor: Min, Kyung-Tae, Yeongtong-gu Suwon-si Gyeonggi-do (KR)
(74) Representative: Grünecker, Kinkeldey, Stockmair & Schwanhäusser Anwaltssozietät

(57) **Abstract**

An apparatus and method for inputting a key input in an information terminal integrated with an HMD. The user is provided with a virtual screen, including a key map (310) and a preview window (412), as a display screen via a display unit having a micro display. A detection signal generation unit generates signals, which are sensed by a detection signal sensing unit and recognized by a recognition unit, so that a telecommunication terminal can recognize the user's motion without any separate HMD input device. Therefore, the user can input a desired key to an information terminal simply by moving their hands without any separate input device. This further improves the portability of the information terminal.

## Description

The present invention relates generally to an information terminal, and more particularly to an information terminal using an HMD.

Portable information terminals generally include all kinds of telecommunication terminals, such as mobile telephones, PDAs, and smart phones. The main advantage of portable information terminals is in fact their portability. As a result, many methods have been devised to improve the portability of such terminals.

Among methods for improving the portability of portable information terminals, a method using an HMD (head mounted display) is currently drawing a great deal of attention. The HMD is generally a visual device for displaying images in front of a user's eyes in a virtual reality system or an augmented reality system and commonly has the shape of goggles or a helmet. Using the HMD, the user can control a computer by directly pointing at or catching a desired menu with hands in a stereoscopically-constructed virtual reality screen, instead of controlling the computer with a planar input device, such as a keyboard or mouse, on a two-dimensional screen, such as a monitor. Accordingly, an HMD information terminal may include a goggle-shaped display unit equipped with an ultra-light micro display for displaying images, an input device for sensing the motion of the user, and a sensor for sensing the signals from the input device and recognizing the user's motion as a key input.

One of the most important technologies in the field of wearable devices using the HMD as the display device is related to how the computer can recognize the user's motion and receive it as key input. Currently available wearable input devices use a method of making a conventional input device in a compact size and attaching it to the user's body or a method of attaching an input device capable of generating signals, which can be sensed by the sensor of the HMD, to the user's body so that the sensor can sense them. An example of a conventional input device made in a compact size and attached to the user's body, as in the former method, is a Wrist Keyboard available from L3 system. This is a conventional computer keyboard is made size small enough to be mounted on the user's wrist.

Another example of an input device capable of generating signals that can be sensed by the sensor of the HMD, as in the latter method, is a Scurry® available from Samsung Electronics. This is a mouse, which can be mounted on the user's hand, just like a glove.

Conventional HMD input devices including the ultra-compact keyboard mounted on the user's wrist, such as the Wrist Keyboard, and the mouse mounted on the user's hand, such as the Scurry®, however, have a problem in that the user must always attach a separate device to a part of their body. For example, the Wrist Keyboard may be very inconvenient on a very hot summer day, when mounted on the user's wrist, and the user's sweat may even cause the device to erroneously function. Even when the sensing device is manufactured in an ultra-small size corresponding to a ring or bracelet for maximum user convenience, the user may forget the fact that he is wearing the device and wash his hands. The device then may be damaged by water.

The most desirable manner of inputting the user's motion into the HMD, therefore, is mounting no input device on the user's body. In particular, a sensor capable of sensing the user's motion is used and the device using the HMD is controlled just by the user's motion, instead of receiving input signals from the input device to recognize the user's motions. Therefore, various technologies have been developed to sense the user's motion without a separate input device, including one using a sensing camera. The technology using the sensing camera, however, must check whether the user's specific motion is repeated for at least a predetermined period of time, even when the motion has been sensed, to distinguish the motion from the background.

For example, when the user shakes his hand in a specific position for at least a predetermined period of time, it is recognized as a motion. Unless the user makes repeated motions or repeats the same motion for at least a predetermined period of time, however, the user's motion cannot be instantly recognized as a control signal. That is, the method of using the sensing camera to recognize the user's motion only when it is repeated for at least a predetermined period of time has a problem in that it has poor accuracy and the user must spend at least a predetermined period of time whenever a single key is input. Accordingly, this method is not suitable for use in an information terminal, in spite of the advantage of sensing and recognizing the user's motion without any separate input device.

In order to use the HMD for an information terminal, therefore, a separate input device must be provided to receive key input from the user. Such a separate input device, however, may be replaced by the information terminal itself. When the HMD is used for an information terminal, consequently, a key input unit provided on the information terminal body is generally used as the input device for the HMD. More specifically, the HMD is provided as the display device of the information terminal and is wirelessly or wired connected to the information terminal body so that key inputs can be input with the key input unit of the information terminal itself.

However, in such a conventional method of using the key input unit provided on the information terminal body as the input device of the HMD, the user must carry both the HMD and the information terminal body in an inconvenient manner.

Accordingly, the present invention has been designed to solve the above and other problems occurring in the prior art. The object of the present invention is to provide an HMD information terminal combining a HMD with an information terminal so that a user's motion can be sensed and recognized as key input without any separate input device.

This object is solved by the subject matter of the independent claims. Preferred embodiments are defined in the dependent claims.

In order to accomplish the above, there is provided an assembly of an HMD information terminal having an HMD and a key input apparatus. The assembly includes a micro display for displaying a virtual screen; a key information storage unit for storing key map information of the virtual screen displayed by the micro display; a detection signal generation unit for generating detection signals for identifying a user's motion within a sensing distance set by the user; a detection signal sensing unit having a reflection signal sensing unit for sensing detection signals reflected by the user's body; a recognition unit for recognizing the user's motion based on reflected detection signals and key information based on the motion; and a control unit for displaying the key map information, sensing the user's motion based on detection signals, and recognizing the sensed motion as specific key input.

In accordance with another aspect of the present invention, there is provided a method for receiving a key input in an HMD information terminal having an HMD. The method includes the steps of: loading virtual screen information; displaying a virtual screen based on the loaded virtual screen information; generating detection signals for detecting a user's motion; adjusting the sensing distance of detection signals; sensing detection signals reflected by the user's body and recognizing a key based on them; and receiving input of a key value based on the recognized key.

The above object and other aspects, features, and advantages of the present invention will be more apparent from the following detailed description taken in conjunction with the accompanying drawings, in which:
FIG. 1 is an illustrative view showing an example of a game using virtual reality;
FIG. 2 is a block diagram illustrating a telecommunication terminal according to an embodiment of the present invention;
FIG. 3 illustrates a telecommunication terminal according to an embodiment of the present invention;
FIGs. 4A and 4B illustrate HMD display screens according to an embodiment of the present invention;
FIG. 5 is a flowchart illustrating a key input process in a telecommunication terminal according to the present invention;
FIG. 6 is a flowchart illustrating a key recognition process based on a signal detected in FIG. 5;
FIG. 7 illustrates key recognition according to an embodiment of the present invention;
FIG. 8 is a flowchart illustrating a process selecting a character from a key recognized as illustrated in FIG. 5; and
FIGs. 9A and 9B illustrate a character selection process according to an embodiment of the present invention.

Preferred embodiments of the present invention will be described in detail herein below with reference to the accompanying drawings. In the following description of the present invention, a detailed description of known functions and configurations incorporated herein is omitted to avoid making the subject matter of the present invention unclear. It is to be noted that the same components are given the reference numerals throughout the drawings. Although the present invention can be applied to all kinds of portable information terminals, the present invention will now be described with reference to telecommunication terminals for ease of description.

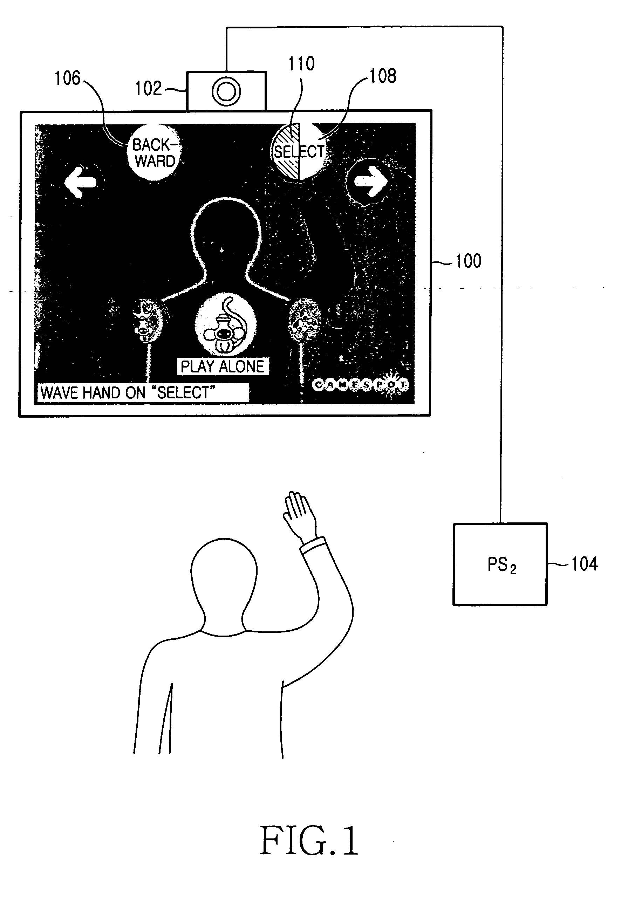

FIG 1 illustrates one of EyeToy™ series run in Playstation 2®, which is a consol game machine manufactured by Sony Corp., Japan. The EyeToy uses a sensing camera to recognize a user's motion and proceeds with the game based on the recognized motion. As the user raises a hand to select one of menus 106 and 108 displayed on a TV screen 100, the camera 102 senses the motion of the hand and transmits it to the Playstation 2® (PS2) 104. The PS2 104 then recognizes the user's motion as sensed by the camera 102 and selection of a specific menu 108 based on the motion. The PS2 104 monitors whether the user's motion continues for a predetermined period of time, as indicated by a gauge 110 shown in the selected menu. If the user's motion lasts for the predetermined period of time, it is considered as the user's selection and an operation is performed corresponding to the selected menu.

As described above, the EyeToy adopts a method of using a sensing camera to sense the motion of the user hand. The sensing camera checks if a specific motion continues for a predetermined period of time in the same position, in order to distinguish the user's actual motion for control from any background motion. Accordingly, the user cannot avoid waving his hand within the selected menu until the gauge 110 disappears, as shown in the upper right corner of the game screen in FIG 1. Therefore, the method of using a sensing camera to sense and recognize the user's motion has a problem in that the user's motion cannot be sensed as a control signal until it is repeated for a predetermined period of time, which requires the user to spend a predetermined period of time whenever a single key is input.

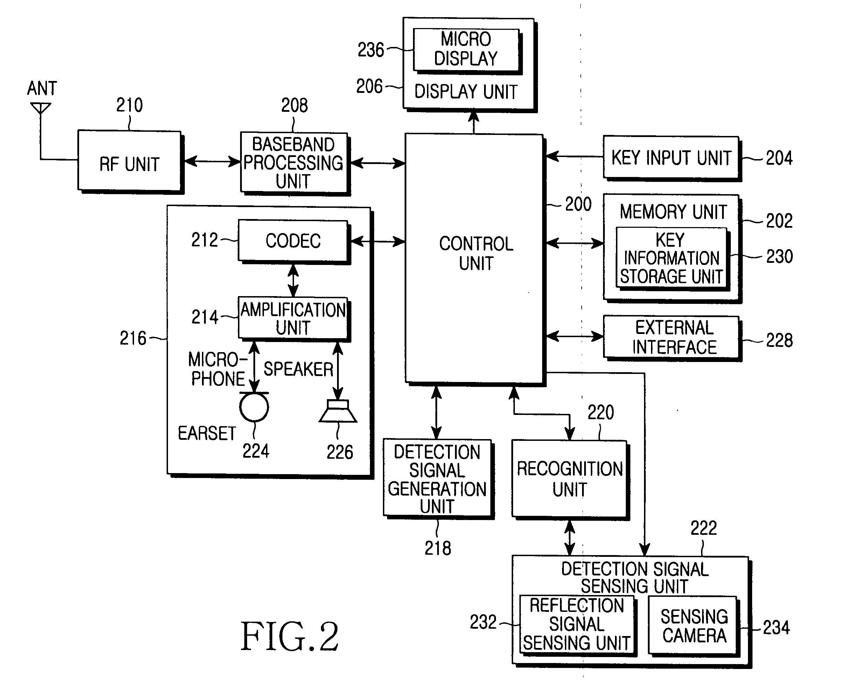

Instead of using a sensing camera, the present invention uses detection signals to detect and recognize the user's motion. FIG. 2 is a block diagram illustrating a telecommunication terminal according to an embodiment of the present invention. Referring to FIG. 2, a memory unit 202, a key input unit 204, a display unit 206, an RF (radio frequency) unit 210, a baseband processing unit 208, a codec 212, an external interface unit 228, a detection signal generation unit 218, a recognition unit 220, and a detection signal sensing unit 222 are connected to a control unit 200. The control unit 200 processes voiceband signals and data based on protocols for telephone communication, data communication, or wireless Internet connection and controls each part of the telecommunication terminal. The control unit 200 loads a key map stored in the memory 202 and displays it. The control unit 200 controls the detection signal generation unit 218 to generate detection signals for detecting the user's motion and controls the detection signal sensing unit 222 to sense the user's motion based on the reflection signals of the signals generated by the detection signal generation unit 218 and a sensing camera. The control unit 200 recognizes a user key input based on the loaded key map and the user motion recognized by the recognition unit 220.

The memory unit 202 connected to the control unit 200 includes a ROM (Read Only Memory), a RAM (Random Access Memory), and a flash memory and includes a key information storage unit 230 for storing information on various key maps. The key input unit 204 has a number of operation keys including a power on/off key.

In contrast to a keypad of a conventional telecommunication terminal, preferably, the key input unit 204 of the telecommunication terminal of the present invention has a limited number of physical keys, including a power on/off key and a virtual screen on/off key, which cannot be selected from a menu on a virtual screen using an HMD.

The display unit 206 includes an HMD, which is provided with a micro display 236 and displays various information on a stereoscopic virtual screen to the user under control of the control unit 200. The RF unit 210 transmits and receives RF signals to and from base stations via an antenna ANT. The RF unit 210 converts received signals into IF (intermediate frequency) signals and outputs them to the baseband processing unit 208. The RF unit 210 converts IF signals input from the baseband processing unit 208 into RF signals and transmits them.

The baseband processing unit 208 is a BBA (baseband analog ASIC) for providing an interface between the control unit 200 and the RF unit 210. The baseband processing unit 208 converts digital signals of baseband applied from the control unit 200 into analog IF signals and applies them to the RF unit 210. The baseband processing unit 208 also converts analog IF signals applied from the RF unit 210 into digital signals of baseband and applies them to the control unit 200.

The codec 212 connected to the control unit 200 is connected to or included in an earset 216 including an amplification unit 214. The earset 216 according to the present embodiment includes a microphone 224, a speaker 226, the codec 212, and the amplification unit 214 as a whole and is similar to a conventional earset. The codec 212 subjects voiceband signals input from the microphone 224 to PCM (pulse code modulation) encoding and outputs voiceband data to the control unit 200. The codec 212 also subjects voiceband data input from the control unit 200 to PCM decoding and outputs them to the speaker 226 via the amplification unit 214.

The amplification unit 214 amplifies voiceband signals input from the microphone or output to the speaker and adjusts the volume of the speaker and the gain of the microphone under control of the control unit 200. The external interface unit 228 connected to the control unit 200 provides an interface for connecting the telecommunication terminal to an extended memory or extended battery.

The detection signal generation unit 218 generates detection signals to detect user motion within a sensing distance selected by the user. IR rays may be used as the detection signals. In this case, the user motion can be sensed by simply sensing the reflection of IR rays by the obstacle, i.e., the user's body, without any separate input device. Such a configuration using IR rays to sense the user motion, however, is given as an example only and does not limit the present invention.

The detection signal sensing unit 222 includes a reflection signal sensing unit 232 for sensing IR rays generated by the detection signal generation unit 218 and reflected by the user's body, and a sensing camera 234 for sensing moving parts on the screen, i.e., visual information. The recognition unit 220 recognizes visual information, the reflection signals of which have been sensed by the reflection signal sensing unit 232, as the user motion from the moving parts sensed by the sensing camera 234. The recognition unit 220 recognizes key information, which corresponds to the user motion currently recognized, as a key value input by the user from key map information currently loaded by the control unit 200.

According to the present embodiment, therefore, the user can input a key based on the user's motion using the detection signal generation unit 218, the detection signal sensing unit 222, the recognition unit 220, and the key information storage unit 230 without any separate input device.

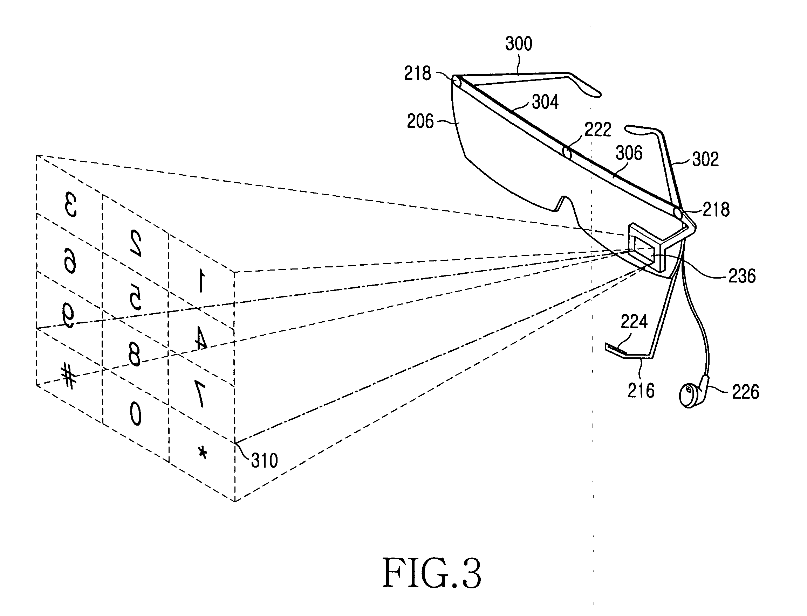

FIG. 3 illustrates an HMD that is integrated with a telecommunication terminal according to an embodiment of the present invention as illustrated in FIG. 3, the HMD has the shape of goggles. The display unit 206, referring to the block diagram shown in FIG. 2, corresponds to the glass portion illustrated in FIG. 3. The display unit 206 has a micro display 236.

FIG. 3 illustrates an example of a key map displayed on a virtual screen 310 by the micro display 236. It is obvious to those skilled in the art that, although the micro display 236 is positioned on the left side of the glass portion in the present embodiment, it may be positioned on the right side thereof for user convenience.

The detection signal generation unit 218 and the detection signal sensing unit 222 illustrated in FIG. 2 are positioned on the frame of the glass portion in the present embodiment illustrated in FIG. 3. More particularly, the detection signal sensing unit 222 is positioned at the center of the frame and the detection signal generation unit 218 is positioned on each end thereof, such that the detection signal detection unit 222 can sense IR signals stereoscopically emitted from the detection signal generation unit 218. Preferably, the detection signal sensing unit 222 includes a sensing camera 234 and a reflection signal sensing unit 232 as illustrated in FIG. 2.

Referring to FIG. 3, the present embodiment includes an earset 216 having a microphone 224 and a speaker 226 having the shape of an earphone, which the user can adjust the length as desired. The earset 216 includes a codec 212 and an amplification unit 214, and is integrated with the microphone 224 and the speaker 226. The components not illustrated in FIG. 3, particularly, the control unit 200, the key input unit 204, the memory unit 202, the external interface unit 228, the baseband processing unit 208, the RF unit 210, and the recognition unit 220, are preferably distributed and positioned inside the remaining parts of the goggles illustrated in FIG 3, i.e., the right frame 304, the right temple 300, the left frame 306, and the left temple 302. For example, the control unit 200 and the key input unit 204 may be positioned inside the right temple 300 and the baseband processing unit 208 and the RF unit 210 may be positioned inside the right frame 304. In addition, the memory unit 202 and the external interface unit 228 may be positioned inside the left temple 302 and the recognition unit 220 may be positioned inside the left frame 306. The external interface unit 228 provides an interface for connecting the telecommunication terminal to an external extended memory or extended battery, and may have an interface port positioned therein or connected to a wire.

In the present embodiment illustrated in FIG. 3, the detection signal generation unit 218 is positioned on each end of the left and right frames and the detection signal sensing unit 222 is positioned at the center thereof. It is obvious to those skilled in the art, however, that such positioning may be modified while achieving a same result.

Further, although only one detection signal detection unit 222 is used in the present embodiment, a number of detection signal sensing units 222 may be provided to improve the accuracy of sensing the user motion. Accordingly, the embodiment illustrated in FIG. 3 should not limit the present invention in any manner.

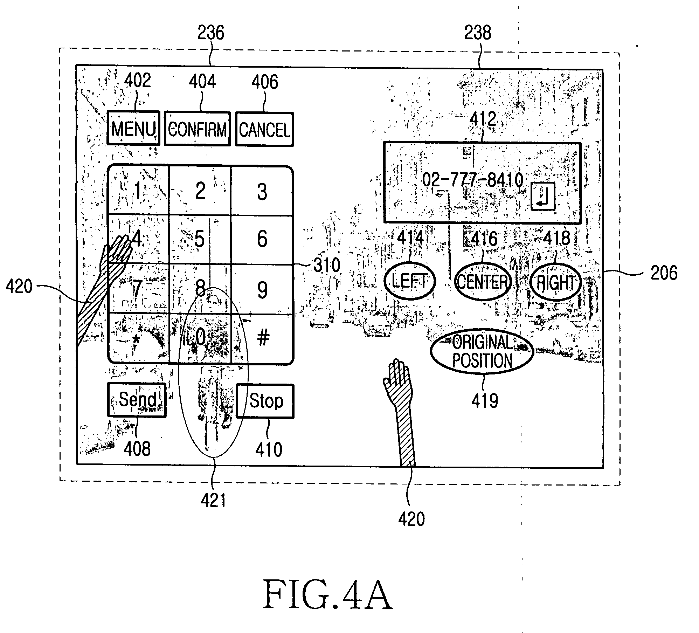

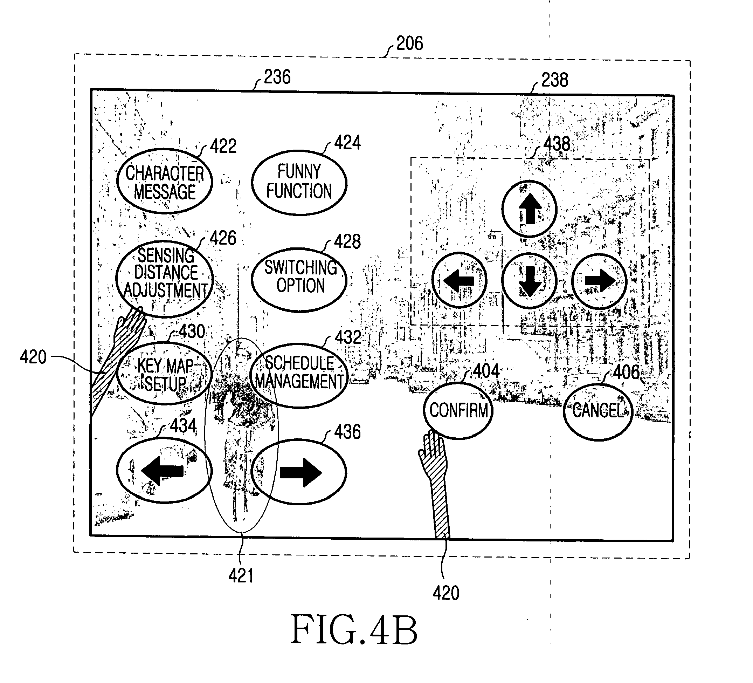

FIGs. 4A and 4B illustrate screens displayed to the user according to an embodiment of the present invention. When the user inputs a power on key or virtual screen on key via the key input unit 204, referring to FIGs. 4A and 4B, the user can view a stereoscopic screen, together with the actual environment through the glasses. More specifically, FIG. 4A illustrates an example of a key map screen displayed to the user in the telecommunication terminal according to the present embodiment and FIG. 4B illustrates an example of a menu screen displayed when the user inputs a menu key illustrated in FIG. 4A.

Referring to FIG. 4A, the left side of the screen displayed to the user by the micro display 236 includes a "menu" key 402 for selecting a menu screen and displaying a menu selection screen, a "confirm" key 404 for confirming the user's key input, a "cancel" key 406 for canceling a selected function, a key map 310, a "send" key 408 for transmitting a call incoming signal to a telephone number input by the user, and a "stop" key 410 for stopping the transmission of the call incoming signal. The right side of the screen includes a preview window 412 for visually checking numerals or characters input by the user, character selection keys 414, 416, and 418 for selecting one of a number of key values, and an "original position" key 419 on which the right hand is to be positioned in a standby state. As the right hand is moved to the "original position" key 419, after one of the character selection keys 414, 416, and 418 is selected, the system is notified that a character input process is completed.

When the user inputs a power on key or virtual screen on key via the key input unit 204, the micro display 236 of the telecommunication terminal according to the present embodiment loads key map information from the key information storage unit 230 under control of the control unit 200 and displays the loaded key map information as illustrated in FIG. 4A. More specifically, FIG. 4A illustrates a key map 310 displayed, which is related to conventional numeric keys.

Referring to FIG 4A, the control unit 200 controls the detection signal generation unit 218 to generate IR rays while such a screen is displayed. The control unit 200 senses every visual information 420 and 421 having a motion from images input via the sensing camera 234. The recognition unit 220 recognizes visual information 420, the IR signal of which has been reflected, as the user motion from the visual information 420 and 421 having motions sensed by the sensing camera 234. Therefore, when the user selects any one of keys of the displayed key map 310, IR rays reflected by the user's hand are sensed by the reflection signal sensing unit 232 and the key selected by the user's hand is recognized as the key the user wants to select. Thereafter, key value is input to the preview window 412 so that the user can confirm the key value input.

In FIG 4A, the key map 310 is displayed on the left side of the screen and the preview window 412, the character selection keys 414, 416, and 418, and the "original position" key 419 are displayed on the right side of the screen. However, in the telecommunication terminal according to the present embodiment, positioning of the displayed contents may be switched from left to right and vice versa, if necessary. For example, the screen menu may be switched in such a manner that the key map 310 can be selected with the right hand and the character selection keys 414, 416, and 418 with the left hand. The reason such switching is possible is that the screen realized according to the present embodiment is not a physically realized keypad but a screen virtually displayed in the space. Such a switching function can be selected from menus displayed when the user selects the menu key 402.

FIG 4B illustrates an example of menus displayed on a virtual screen according to the present embodiment. Referring to FIG. 4B, the user can select from the left side of the display screen a character message menu key 422 for using a character message function; a menu key 424 for using various entertainments including a game; a sensing distance adjustment menu key 426 for adjusting the distance within which the detection signal sensing unit 222 can sense IR rays reflected by the user's body as desired; a switching option key 428 for selecting a switching option; a key map setup key 430 for selecting a key map 310 enumerating a list of keys input by the user; a schedule management key 432 for managing the user's schedule; and menu screen switching keys 434 and 436 for searching other menus. The user can select from the right side of the display screen one of cursor keys 438 for selecting one of upper, lower, left, and right directions; a "confirm" key for reconfirming the user's selection; and a "cancel" key 406 for canceling the user's selection.

The switching option key 428 is used to switch the display contents on the left side of the screen to the right side and vice versa, as described above, when the user wants to use the right hand to select the keys of the key map 310 or when he finds it more convenient to watch the preview window 412 on the left side. When the user selects the switching option key 428, the control unit 200 switches the information displayed on the left side of the micro display 236 and that on the right side to each other and display them.

In addition, when the user selects the sensing distance adjustment menu key 426, the user can set the sensing distance within which the reflection signal sensing unit 232 of the detection signal sensing unit 222 can sense IR rays generated by the detection signal generation unit 218. This menu makes it possible for the user to directly adjust the effective sensing distance of IR rays sensed by the detection signal sensing unit 222 when the user has difficulty in selecting a desired key from the virtual screen due to a narrow space or when the sensitivity of IR rays degrades due to a bad weather When the user is in a space large enough to freely move in, for example, the user may set the sensing distance value to 70cm so that he can select a desired key with the full length of his arms. However, when the user is in a narrow space, such as in a crowded subway train, however, the user may set the sensing distance value as small as 20cm so that he can select a desired key with a finger. Accordingly, the user can set a desired sensing distance based on the size of an available space.

Further, when in thick fog, IR rays are heavily affected and the sensing distance may be set to improve the sensitivity of the detection signal sensing unit 222 to sense the key input. In this case, the user can directly input a desired value of the sensing distance to adjust it. Additionally, the user may also select a sensing distance value optimized for each situation based on experiments. For example, supposing that the optimum value of the sensing distance is 20cm when the telecommunication terminal according to the present embodiment is used in a subway: an "inside subway" menu having the optimum value of the sensing distance based on the experiment may be provided to be selected by the user so that the sensing distance can be automatically adjusted to 20cm.

The key map setup key 430 illustrated in FIG. 4B is a menu key for enabling the user to select a desired key map to be displayed for improved user interface. In general, manufacturers of telecommunication terminals use different key maps as illustrated in Tables 1 and 2 given below. Examples of key maps will now be described with reference to Tables 1 and 2.

**Table 1**

| | | |
|---|---|---|
| 1 QZ | 2 ABC | 3 DEF |
| 4 GHI | 5 JKL | 6 MNO |
| 7 PRS | 8 TUV | 9 WXY |
| * | 0 | # |

**Table 2**

| | | |
|---|---|---|
| 1 @: | 2 ABC | 3 DEF |
| 4 GHI | J 5KL | 6 MNO |
| 7 PQRS | 8 TUV | 9 WXYZ |
| * | 0 | # |

Tables 1 and 2 show key maps used by different manufacturers of telecommunication terminals. More particularly, Table 1 shows a key map used in telecommunication terminals manufactured by Samsung Electronics and Table 2 shows a key map used in telecommunication terminals manufactured by LG Electronics. Comparison of Tables 1 and 2 shows a considerable difference between both key maps. That is, a user who has used a telecommunication terminal manufactured by LG Electronics would have considerable difficulty in using a telecommunication terminal manufactured by Samsung Electronics, due to different key maps, and vice versa. Therefore, for maximized user convenience, information on key maps used by different manufactures is stored in the key information storage unit 220 according to the present invention, such that the user can select his accustomed key map.

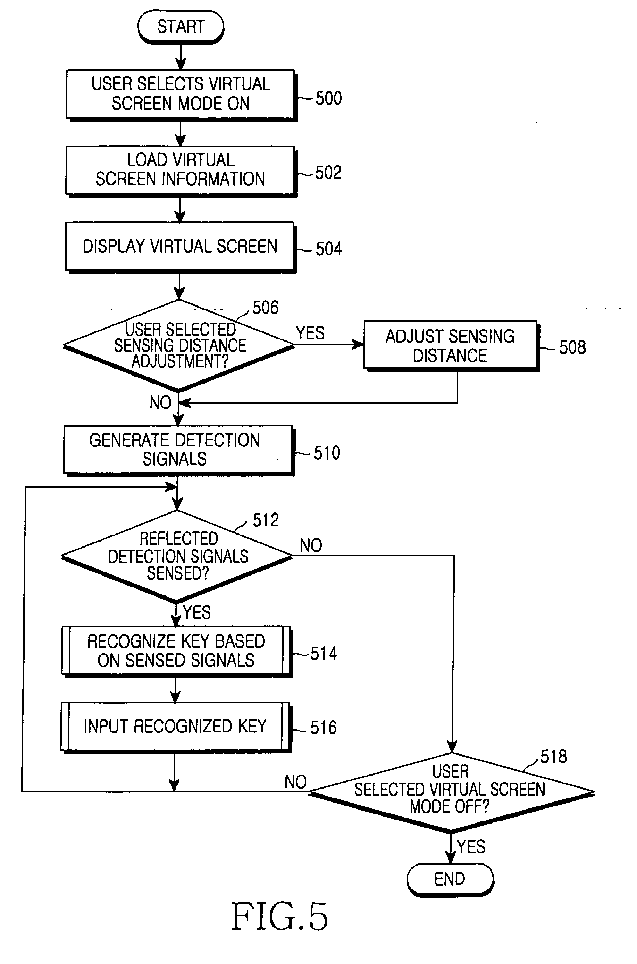

FIG. 5 is a flowchart illustrating a process of recognizing a user motion as key input in a telecommunication terminal according to an embodiment of the present invention. Referring to FIG 5, when the user tums on a virtual screen mode in step 500, the control unit 200 proceeds to step 502 and loads information on the virtual screen set by the user from the memory unit 202. Turning on a virtual screen mode, in this case, may corresponds to a case wherein the user turns on the power switch to use the telecommunication terminal. The information on the virtual screen may include information on the sensing distance, switching option, and key map set by the user, as illustrated in FIG. 4B.

After loading information on the virtual screen in step 502, the control unit 200 displays a screen, based on the information on the virtual screen, on the display unit 206 via the micro display 236 in step 504. The control unit 200 proceeds to step 506 to determine if the user has selected sensing distance adjustment. The control unit 200 proceeds to step 508, when the user has selected sensing distant adjustment in step 506, and inputs the sensing distance set by the user to the detection signal sensing unit 222 to adjust the sensing distance. Thereafter, control unit 200 proceeds to step 510 and generates detection signals for detecting the user's motion.

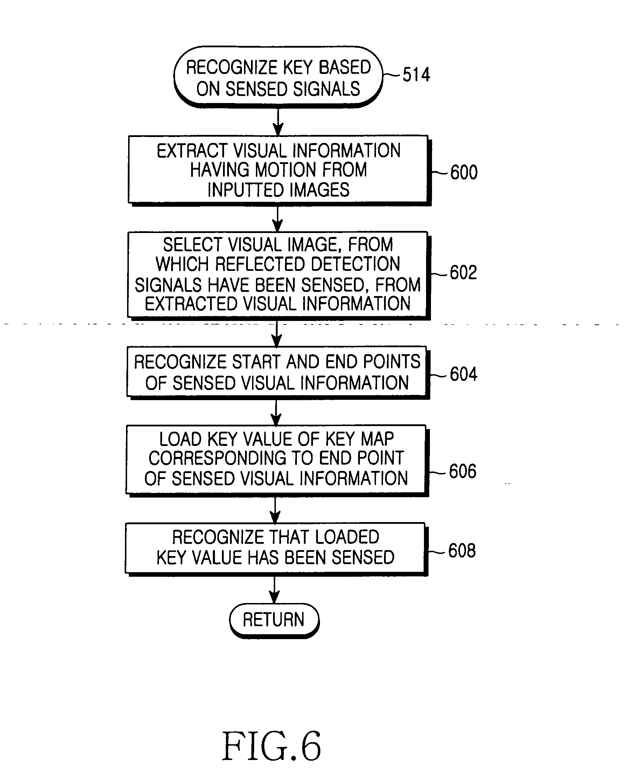

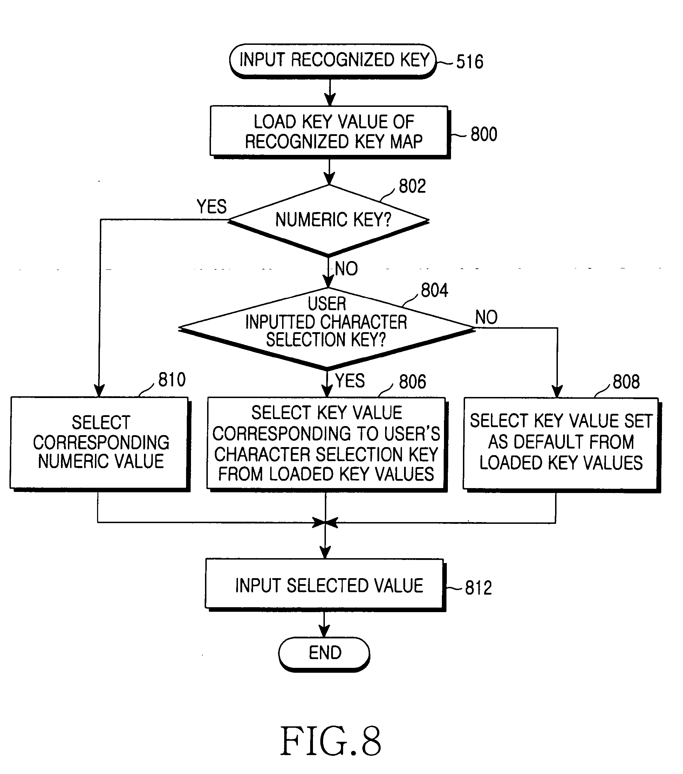

However, when the user has not selected sensing distance adjustment in step 506, the control unit 200 directly proceeds to step 510 and generates detection signals. The control unit 200 proceeds to step 512 to determine if detection signals reflected by the user's body have been sensed. If the user has previously set a sensing distance value, the preset value is used and, if not, a default value is used. The control unit 200 proceeds to step 514, when reflected detection signals have been sensed in step 512, and recognizes a key based on the sensed signals corresponding to the user's motion. After recognizing a key, the control unit 200 proceeds to step 516 to receive input of key value selected by the user. The process of recognizing a key based on the sensed signals in step 514 will be described later in more detail with reference to FIG 6. In addition, the process of selecting a recognized key value based on the user's motion will be described later in more detail with reference to FIG 8.

The control unit 200 proceeds to step 518, when reflection signals of the detection signals generated in step 510 have not been sensed in step 512, and determines if the user has selected virtual screen mode off. When the user has selected virtual screen mode off, the current virtual screen mode is terminated. However, the control unit 200 returns to step 512, when the user has not selected virtual screen mode off, and determines if detection signals reflected by the user's body, as the user moves, have been sensed, in order to confirm if the user has input a key again.

FIG. 6 is a flowchart illustrating a key recognition process based on signals detected as illustrated in FIG. 5. Referring to FIG 6, as a key recognition step based on sensed signals begins, the control unit 200 proceeds to step 600 to extract images, the motion of which has been sensed, as visual information from images input from the sensing camera 234. As illustrated in FIGs. 4A and 4B, examples of such visual information include the user's hand 420 and a person 421 on a bicycle. Both are moving images and are recognized as visual information by the sensing camera 234, which then informs the control unit 200 of the visual information.

The control unit 200 proceeds to step 602 to determine if visual information, from which IR signals generated by the detection signal generation unit 218 have been sensed, exists or not among the visual information extracted in step 600. As a result, visual information from which IR signals have been sensed are recognized as the user's motion. Accordingly, the detection signal generation unit 218 generates IR rays as detection signals for detecting the user's motion and the reflection signal sensing unit 232 senses IR rays reflected by the user's body within the sensing distance. The visual information on the person 421 on a bicycle, is not recognized as the user's motion.

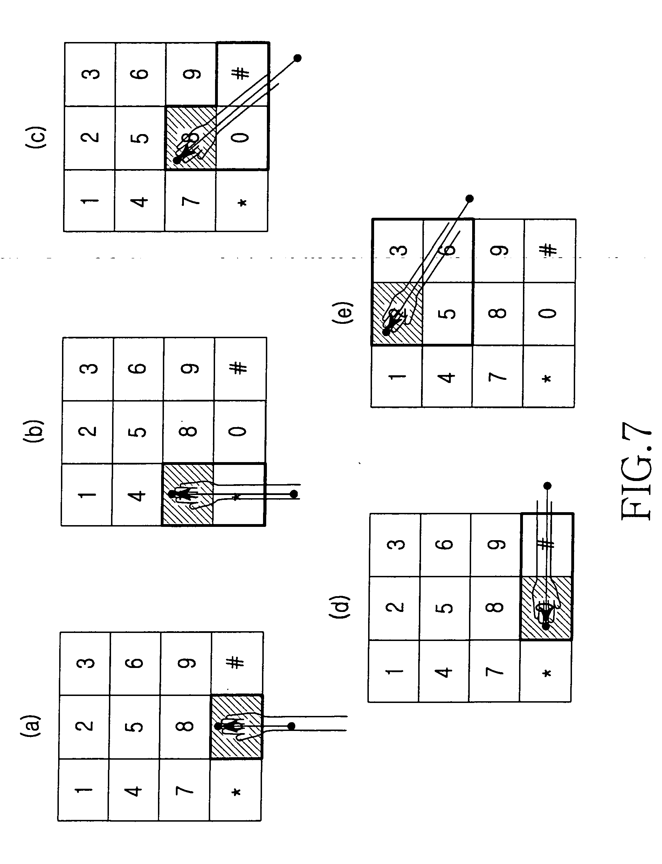

After extracting only the user's motion from visual information sensed by the sensing camera 234, the control unit 200 proceeds to step 604 to recognize the user's motion as key input using the recognition unit 220. In step 604, the extracted motion of the user's hand is recognized in terms of start and end points. As used herein, the start point refers to a part of the user's motion, which has been recognized as key input in step 604, intersecting with the boundary between the inside and outside of the screen displayed by the micro display 236 and the end point refers to the farthest point from the start point. When the user stretches his arm to select one of the keys displayed on the virtual screen, specifically, the end of his hand points at any point on the displayed screen and the part of the user's body from his shoulder to the end extends from outside the screen to the inside. In this case, the part of the user's arm extending from the end of his hand to outside the screen, which has been recognized as visual information, intersects with the boundary between the inside and outside of the screen. The point of intersection is recognized as the start point, and the farthest point from it within the part of the user's arm recognized as visual information because, when the user stretches his arm to select a key, the point corresponding to the end of the hand is farthest from the start point. The control unit 200 recognizes the end point, which is pointed at by the user, from the visual information, from which the user's motion has been sensed, and considers it as the user's key input. The key input based on recognition of the start and end points will be described later in more detail with reference to FIG. 7.

After recognizing the start and end points in step 604, the control unit 200 proceeds to step 606 to load a key value of a key map corresponding to the end point of the sensed visual information. The control unit 200 proceeds to step 608 to recognize the key value loaded in step 604 as the key value, which has been sensed based on the user's motion.

Examples of the process of recognizing start and end points and receiving input of a corresponding key in steps 604 and 606 of FIG. 6 are given in FIG. 7.

Referring to FIG. 7, image (a) illustrates the user hand selecting a single key, wherein the control unit 200 also senses a single key. More specifically, the end of the user hand points at the "0" key and the user arm extends from outside the screen to "0" key. This may be represented by an arrow having an initial point positioned outside the screen and a head pointing at "0" key. In this case, the control unit 200 recognizes the initial point of the arrow as the start point and the head thereof as the end point. The control unit 200 then recognizes only "0" key, which is the end point, as the user's key input. Image (b) illustrates a case wherein both the "*" and "7" keys are sensed by the user's arm. Although both the "*" and "7" keys are sensed in this case, the control unit 200 recognizes only "7" key as the user's key input, which corresponds to the end point pointed at by the end of the user hand. This is similar to other cases including those illustrated in images (c) to (e), wherein other keys, as well as the key intended by the user, are sensed by the user's motion. Although three keys are simultaneously sensed in image (c), only the "8" key is recognized as input, which corresponds to the end point pointed at by the end of the user hand. Although two horizontal keys are simultaneously sensed in image (d), only the "0" key is recognized as an input, which corresponds to the end point pointed at by the end of the user hand. Although four keys are simultaneously sensed in image (e), only the "2" key is recognized as input, which corresponds to the end point pointed at by the end of the user hand.

After recognizing the key selected by the user, the control unit 200 recognizes the key as key input. However, the recognized key does not necessarily correspond to a single numeral or character. It may be possible to provide a separate key map for selecting character keys and load it or provide a separate key map for selecting numeral keys and load it, such that a single key corresponds to a single key input as in the present embodiment. When each character is to correspond to a single key, however, a larger number of keys must be provided. This may make the key map too complicated. Therefore, the key map is generally configured in such a manner that a single character key corresponds to a number of characters. This may be similarly applied to the present embodiment.

FIG. 8 is a flowchart illustrating step 516 of FIG. 5 in more detail, wherein a recognized key is input based on the user's selection as illustrated in FIG. 7, under a condition that at least one character is assigned to each character key. Referring to FIG. 8, when the user selects a key in step 514, the control unit proceeds to step 800 and loads a number of key values assigned to the selected key. The control unit 200 proceeds to step 802 to determine if the recognized key has been selected from a key map including only numeral keys.

When the selected key belongs to a key map including only numeral keys, the control unit 200 proceeds to step 810 to recognize the corresponding numeral value as the key value selected by the user. The control unit 200 proceeds to step 812 to receive input of the key as selected by the user. When the recognized key does not belong to a key map including only numeral keys in step 802, the control unit 200 proceeds to step 804 and determines if the user has input a character selection key.

The control unit proceeds to step 806, when the user has input a character selection key in step 804, and selects a key value from values loaded in step 800, which corresponds to the character selection key input by the user. After proceeding to step 812, the control unit 200 recognizes the selected key value as the user's selection and receives input thereof.

When the user has not selected a character selection key in step 804, the control unit 200 selects a key value, which has been set as default, from key values loaded in step 800 as selected by the user. The control unit 200 proceeds to step 812 and receives input of the selected value.

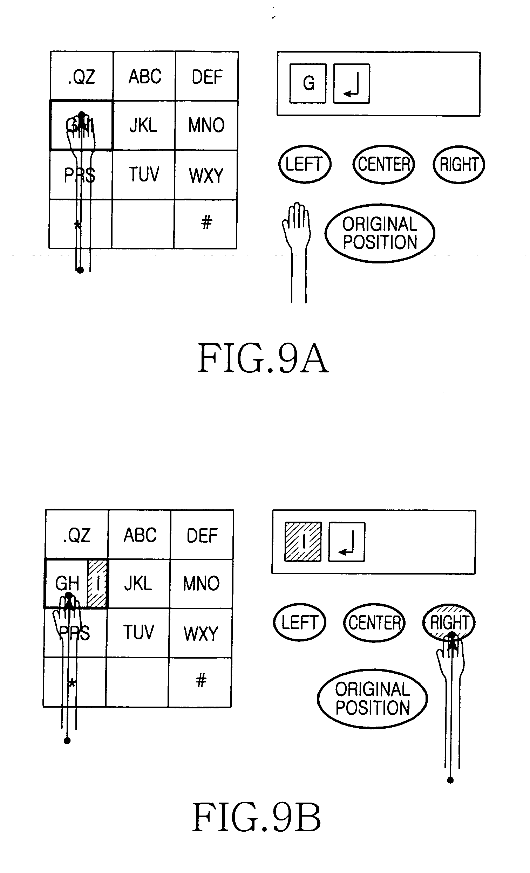

FIGs. 9A and 9B illustrate examples of the character selection process illustrated in FIG. 8. More specifically, FIG. 9A corresponds to a case wherein the user selects a key from a key map and FIG. 9B corresponds to a process of selecting one from characters included in the key previously selected by the user.

Referring to FIGs. 9A and 9B, the key selected by the user in FIG. 9A includes three characters, "G", "H", and "I", and the preview window 412 displays character "G," which is the default character of the key selected by the user, because the user has not yet additionally selected one of the character selection keys 414, 416, and 418.

FIG. 9B illustrates a state after the user has selected "right" character selection key 418 from the state illustrated in FIG. 9A. Characters assigned to a key on the key map correspond to the character selection keys 414, 416, and 418, respectively. If the user inputs "right" character selection key 418 in FIG. 9B, therefore, character "l" corresponding thereto is selected. The character input method used in the telecommunication terminal according to the present embodiment, therefore, enables the user to input desired characters with both hands much faster than a conventional telecommunication terminal.

An example of character key mapping according to the present embodiment will now be described with reference to Table 3 given below.

**Table 3**

| Button No. | Left | Center | Right |
|---|---|---|---|
| 1 | . | Q | Z |
| 2 | A | B | C |
| 3 | D | E | F |
| 4 | G | H | I |
| 5 | J | K | L |
| 6 | M | N | O |
| 7 | P | R | S |
| 8 | T | U | V |
| 9 | W | X | Y |
| 0 | | | |

Table 3 shows an example of key setup in a key map used in telecommunication terminals manufactured by Samsung Electronics. When the user wants to input character "S," for example, the user must press the "7" key three consecutive times in a conventional telecommunication terminal. However, in a telecommunication terminal according to the present invention, the can select character "S" at a time with simultaneous operation using both hands. Instead of inputting character keys one by one according to a character key composition method, therefore, the user can directly input a displayed character while visually checking it.

Conventional telecommunication terminals have a compact size for improved portability, but can be very inconvenient for elderly people and those with poor sight. The telecommunication terminal according to the present invention, however, uses a virtual screen to provide a wider key map screen than a conventional physical keypad such that the user can simply point at a desired key displayed on the virtual screen, instead of memorizing a specific character combination method or checking small character selection keys for key input. As such, even elderly people and those with poor sight can easily and conveniently use it.

As described above, the present invention provides the user with a virtual screen, including a key map and a preview window, as a display screen via a display unit having a micro display. A detection signal generation unit generates signals, which are sensed by a detection signal sensing unit and recognized by a recognition unit, such that a telecommunication terminal can recognize the user's motion without any separate HMD input device. Therefore, the user can input a desired key to an information terminal simply by moving his hands without any separate input device. Accordingly, the present invention further improves the portability of the information terminal.

While the present invention has been shown and described with reference to certain preferred embodiments thereof, it will be understood by those skilled in the art that various changes in form and details may be made therein without departing from the scope of the present invention as defined by the appended claims.

For example, although the present invention has been described with reference to telecommunication terminals for convenience of explanation, the present invention can be applied to all kinds of portable information terminals including telecommunication terminals. That is, although an embodiment configured in a goggle shape has been illustrated and described, the present invention is not limited by such a shape and a conventional glass shape may be used when components including a control unit and a memory unit have a small size.

In addition, an extended memory or battery may be mounted via an external interface unit for improved performance. For example, a memory pack having MP3 music clips stored therein may be connected an information terminal according to the present invention via an external interface pack so that the user can listen to them.

In addition, a laptop PC or POST PC may be connected to the external interface to input a key selected based on the user's motion among keys displayed by the micro display. Therefore, the scope of the present invention is not to be defined by the described embodiments, but by the appended claims.

## Claims

1. An assembly of an information terminal including an HMD, head mounted display, and a key input apparatus, the assembly comprising:
a micro display for displaying a virtual screen;
a key information storage unit for storing key map information of the virtual screen displayed by the micro display;
a detection signal generation unit for generating detection signals for identifying a user motion within a sensing distance set by a user;
a detection signal sensing unit having a reflection signal sensing unit for sensing detection signals reflected by the user's body;
a recognition unit for recognizing the user motion based on reflected detection signals and key information based on the user motion; and
a control unit for displaying the key map information, sensing the user motion based on detection signals, and recognizing the sensed motion as specific key input.

2. The assembly as claimed in claim 1, wherein the micro display displays a screen in which left and right menus are switched so that left and right hands can be used interchangeably.

3. The assembly as claimed in claim 1 or 2, wherein the key information storage unit stores key map information on at least one key input mode of a telecommunication terminal manufacturer.

4. The assembly as claimed in one of claims 1 to 3, wherein the detection signal generation unit uses IR, Infrared, signals as detection signals.

5. The assembly as claimed in one of claims 1 to 4, wherein the detection signal sensing unit senses reflected detection signals only within a range set by the user by varying an effective sensing distance setup in conformity with a service environment.

6. The assembly as claimed in one of claims 1 to 5, further comprising an external interface unit for connecting to at least one of an external extended memory and an external extended battery.

7. The assembly as claimed in claim 6, wherein the external interface unit is connected to one of a laptop PC, Personal Computer, and a POST PC for input of the key input based on the user motion input via the micro display and the detection signal sensing unit.

8. A method for receiving a key input in an information terminal having an HMD, head mounted display, the method comprising the steps of:
loading virtual screen information;
displaying a virtual screen based on the loaded virtual screen information;
generating detection signals for detecting a user motion;
adjusting a sensing distance of the detection signals;
sensing detection signals reflected by the user's body;
recognizing a key based on the reflected signals; and
receiving input of a key value based on the recognized key.

9. The method as claimed in claim 8, wherein the virtual screen information includes screen switching information based on a user selection to switch contents to be displayed on a right side of the screen and those to be displayed on a left side thereof, and key map information set by the user.

10. The method as claimed in claim 8 or 9, wherein, in the step of adjusting the sensing distance, a setup value of an effective sensing distance is input by the user.

11. The method as claimed in one of claims 8 to 10, wherein, in the step of adjusting the sensing distance, any one of optimized sensing distance values, which have been determined through experiments for optimizing the sensing distance values in different circumstances, is selected by the user and the sensing distance is automatically adjusted based on the optimized sensing distance value.

12. The method as claimed in one of claims 8 to 11, wherein the step of sensing detection signals comprises the steps of:
extracting detection signals having motion, as visual information, from images input to the sensing camera of the information terminal;
selecting visual information, from which reflection signals have been sensed, from the extracted visual information as user visual information based on the user motion;
analyzing the user visual information;
recognizing a part of the user visual information intersecting with the boundary between the outside and inside of the currently displayed screen as the start point of the user visual information;
recognizing a farthest point from the start point within a range included in the user visual information as an end point;
loading key information corresponding to the end point from the virtual screen information; and
recognizing the loaded key information as a value selected by the visual information based on the user motion.

13. The method as claimed in one of claims 8 to 12, wherein the step of receiving input of a key value comprises the steps of:
loading at least one key value corresponding to a key selected in the step of sensing detection signals;
determining if a character selection key has been input by the user to select any one of the key values;
selecting a key value, when the character selection key has been input; and
receiving input of the key value based on the selected character selection key as a key input selected by the user.

14. The method as claimed in claim 13, wherein the step of selecting the key value comprises selecting a key value set as default, when the user has input no character selection key.
